# EUROPEAN PATENT APPLICATION

(11) **EP 4 621 199 A1**
(43) Date of publication of application: **24.09.2025**
(21) Application number: 24382311.9
(22) Date of filing: 22.03.2024
(51) Int. Cl.: F02C 3/22, F02C 7/224, F02C 9/40

(54) **HYBRID FUEL FEEDING SYSTEM**

(71) Applicant: Airbus Operations, S.L.U., 28906 Getafe (Madrid) (ES)
(72) Inventor: RAVENEAU, Guillaume, 31060 Toulouse (FR)
(74) Representative: ABG Intellectual Property Law, S.L.

(57) **Abstract**

The present invention belongs to the field of aircraft and relates to a fuel feeding system for an aircraft. The present invention also relates to an aircraft comprising said fuel feeding system and to a method for feeding an engine of an aircraft.

## Description

### TECHNICAL FIELD OF THE INVENTION

The present invention belongs to the field of aircraft and relates to a fuel feeding system for an aircraft. The present invention also relates to an aircraft comprising said fuel feeding system and to a method for feeding an engine of an aircraft with fuel.

### BACKGROUND OF THE INVENTION

Aviation industry is undergoing a concerted effort to explore alternative fuels and propulsion systems as part of a broader initiative to mitigate the environmental impact of air travel. In that sense, a particularly promising candidate is the implementation of hydrogen as an aviation fuel. The combustion of hydrogen results in the emission of mainly water vapor, positioning it as a clean and environmentally friendly energy source.

The hydrogen used as fuel is generally used in its most stable form, which is in the form of a diatomic molecule.

However, the practical incorporation of hydrogen into aviation as a fuel source still presents technical challenges. Among the most relevant of these challenges is the effective storage of hydrogen, due to its specific storage conditions. Fuel storage tanks demand a meticulous balance between structural integrity, weight efficiency and safety considerations. At the same time, fuel storage tanks must comply with the hydrogen storage conditions such as temperature, volume, pressure and state, which presents an additional layer of complexity. The main advantage of liquid hydrogen is that a larger amount of hydrogen can be stored in a smaller space, compared to gaseous hydrogen. However, liquid hydrogen storage requires specialized equipment to maintain liquid hydrogen at the right temperature and pressure.

In the field of engine implementing hydrogen combustion there are also challenges resulting from the need of conditioning the hydrogen fuel. Its temperature and pressure must be adapted from the conditions in which it is stored in the tank before being fed to the engine in proper conditions and also ensuring a secure combustion. This is necessary to avoid damages to the components and conducts of said engine. Due to its storage conditions, around 20K in the aeronautic field, hydrogen is a fuel which requires particular sizing and particular operational conditions.

One of the problems of using hydrogen as fuel for an engine in aircraft is due to the required phase transition since, when stored in the aircraft before feeding the engine, the hydrogen is in liquid phase. However, in order for the engine to work in optimal manners, the liquid hydrogen has to be brought through a phase transition from liquid to gas. This phase change also requires that the feeding system be designed and sized in such a way that hydrogen remains stable while its conditions, such as temperature, pressure and phase, change.

Therefore, in a hydrogen fed engine system, many elements are involved to store the liquid hydrogen and to condition the liquid hydrogen into a gas to fuel the engine. Complexity of aeronautical hydrogen systems is also increased by the required adaptation of expected equipment reliability with restrictive aeronautical safety requirements, thus driving a lot of equipment redundancies and resulting in an increase in the complexity and weight of the aircraft.

Therefore, there is a need for a fuel feeding system able to power the engine in an optimal and compact way. The invention provides an optimized solution.

### SUMMARY OF THE INVENTION

The present invention provides a solution for the aforementioned problems by a hybrid fuel feeding system for an aircraft according to claim 1, an aircraft according to claim 7 and a method for feeding an engine of an aircraft according to claim 8. In dependent claims, embodiments of the invention are defined.

In a first inventive aspect, the invention provides a hybrid fuel feeding system for an engine of an aircraft, the hybrid fuel feeding system comprising:
- a liquid hydrogen tank,
- a gaseous hydrogen tank,
- an accumulator comprising at least two inlets and at least one outlet,
- a first fuel feeding line connecting the liquid hydrogen tank to one of the inlets of the accumulator and comprising at least one pump and at least one heat exchanger,
- a second fuel feeding line connecting the gaseous hydrogen tank to the other inlet of the accumulator and comprising at least one pressure reducing device, and
- an engine feeding circuit connected to the accumulator's outlet;

wherein the at least one pump is connected between the liquid hydrogen tank and the heat exchanger and is configured to increase the pressure of the liquid hydrogen,
wherein the heat exchanger is connected between the at least one pump and the accumulator and is configured to raise the temperature of the liquid hydrogen, and
wherein the pressure in the gaseous hydrogen tank is higher than the pressure in the liquid hydrogen tank.

The hybrid concept according to the present invention implies feeding an engine from two tanks that contain hydrogen, each in a different state, so that there are two feeding lines with different conditioning for the hydrogen fed from each hydrogen tank.

On one hand, the first fuel feeding line extends from the liquid hydrogen tank to the accumulator. This first feeding line is configured to condition the liquid hydrogen to the necessary conditions to be supplied to the engine.

Liquid hydrogen is a very light liquid, which is stored at very low temperature. The storage temperature of liquid hydrogen is -253°C, which requires very efficient thermal insulation to prevent thermal energy loss and evaporation of the liquid hydrogen. Therefore, it is necessary that liquid hydrogen is stored in specially designed cryogenic tanks to maintain hydrogen in its liquid state at low vapor pressure. The cryogenic tanks are thermally insulated to reduce thermal energy loss. The liquid hydrogen is supplied through a line which is also thermally insulated to prevent evaporation of the liquid hydrogen, because the liquid hydrogen evaporates very quickly at ambient temperature, creating about 845 litres of gaseous hydrogen per 1 litre of liquid hydrogen.

On the other hand, in the present invention, the second fuel feeding line extends from the gaseous hydrogen tank to the accumulator. This second feeding line is configured to condition the gaseous hydrogen to the necessary conditions to be supplied to the engine.

The first and the second fuel feeding lines converge in the accumulator. The accumulator comprises a tank in which pressurized fuel is stored.

In the context of the invention, the accumulator has the objective of reducing the pressure variation during the fuel feeding line change.

Specifically, the pressure in the accumulator after the pressure reducing device is the expected pressure depending on the thrust demand of the engine depending on the flight phase.

Each fuel feeding line comprises various conditioning elements. The first fuel feeding line comprises at least one pump and at least one heat exchanger before the accumulator and the second fuel feeding line comprises at least one pressure reducing device before the accumulator.

A pump is used to increase the pressure of a liquid by adding energy to the system, to move the fluid from an area of lower pressure to an area of higher pressure. The pump of the hybrid fuel feeding system of the invention is arranged after the liquid hydrogen tank and has the objective of raising the pressure of the liquid hydrogen that leaves the liquid hydrogen tank and goes to the heat exchanger.

The hybrid fuel feeding system of the invention allows the first feed line pump to operate in a low mass flow range. This is due to the fact that the hybrid fuel feeding system comprises a second fuel feeding line allowing the first fuel feeding line not to be duplicated. Therefore, the pump of the first fuel feeding line can be smaller and therefore lighter. If the first fuel feeding line is duplicated, the mass flow would be divided into the pumps in parallel to maintain availability of the two line's pumps and in case of failure of one pump, the mass flow range of the other pump would be increased, that is, a bigger and heavier pump would be needed.

The heat exchanger has the main function of vaporizing the liquid hydrogen and bring it to required temperature.

It is understood that the liquid hydrogen tank's outlet is connected to the pump's inlet. In the same way, the output of the pump is connected to the inlet of the heat exchanger and the outlet of the heat exchanger is connected to an inlet of the accumulator arranged prior to the engine feeding circuit.

In the second fuel feeding line, the pressure reducing device comprises an inlet connected to the outlet of the gaseous hydrogen tank and an outlet connected to an inlet of the accumulator. This pressure reducing device, as its name indicates, has the objective of reducing the pressure and conditioning the gaseous hydrogen that leaves the gaseous hydrogen tank for its introduction into the accumulator prior to feeding the engine.

Advantageously, having two fuel feeding lines with the aforementioned features provide a fuel feeding system with low complexity and easy to integrate in the aircraft. That is, it is possible to avoid the redundancy of the first fuel supply line thereby reducing complexity and weight of the aircraft.

In an embodiment, in operating conditions, the hybrid fuel feeding system of the invention uses the first fuel feeding line (that is, the liquid hydrogen tank line) as a principal feeding system and the second fuel feeding line (i.e. the gaseous hydrogen tank line) as a second fuel feeding line which is only used for specific situations, for example for safe landing in case of loss or failure of the first fuel feeding line, for example in case of failure of the pump(s). Preferably, the gaseous hydrogen tank connected to the second fuel feeding line is as small as possible to minimize useless weight in the aircraft, but is designed to be able to cover failure cases. In an embodiment, the gaseous hydrogen tank is integrated close to the engine to be fed to reduce as much as possible the total volume of the second fuel feeding line.

Another example of a situation where the use of the second fuel feeding line is advantageous is for specific transitory situations or specific operations in which the first fuel feeding line is not dimensioned to respond, for example, take-off, sloshing event, etc. The presence of the second fuel feeding line allows to minimize the dimensioning of the first fuel feeding line and thereby limit its weight and cost. In these specific transients, the first fuel feeding line delivers at its maximum mass flow and the second fuel feeding line is delivering the missing mass flow to match the engine requirements or if the first fuel feeding line is inoperative for a short moment, the second fuel feeding line provides the full mass flow needed at the engine during the transient waiting for the first fuel feeding line to be operative again.

Advantageously, the hybrid fuel feeding system of the present invention provides hydrogen to the engine allowing the constant and precise control of the hydrogen conditions, such as pressure and temperature.

Therefore, the hybrid fuel feeding system of the invention is simple and allows appropriate feeding of the engine, even in emergency cases.

In an embodiment, the liquid hydrogen tank is a low pressure tank configured to maintain liquid hydrogen at a pressure between 1 and 5 bars, preferably between 3,5 and 4,5 bars, more preferably at approximately 4 bars.

The conditions of the liquid hydrogen tank of this embodiment are the starting conditions of the liquid hydrogen that will subsequently pass through the elements of the first fuel feeding line to the aircraft engine.

In an embodiment the gaseous hydrogen tank of the hybrid fuel feeding system is a high pressure tank configured to maintain gaseous hydrogen at a pressure between 5 bars and 1500 bars. The pressure at the gaseous hydrogen tank is reduced as gaseous hydrogen is consumed.

In that particular embodiment, the conditions of the high pressure of the gaseous hydrogen tank are the starting conditions of the gaseous hydrogen that will subsequently pass through the elements of the second fuel feeding line to the aircraft engine, such as in case of a failure in the first fuel feeding line.

Compared to the conditions at the liquid hydrogen tank, the conditions at the gaseous hydrogen tank are more similar to the ones required to feed the engine. This means that the gaseous hydrogen supplied via the second fuel feeding line has to undergo fewer changes of state and/or conditions, so that the supply via the second fuel feeding line is faster. The gaseous hydrogen tank therefore allows providing a quick reaction in the event of a failure of the first fuel feeding line.

Optionally, in a particular embodiment, the first fuel feeding line comprises two pumps between the liquid hydrogen tank and the accumulator, wherein the pumps are configured to successively increase the pressure of the liquid hydrogen from an initial pressure in the liquid hydrogen tank to a second pressure.

In this embodiment, the first pump increases the initial pressure to an intermediate pressure and the second pump increases the pressure from intermediate pressure to a second pressure. Having two pumps can increase efficiency and reduce the pressure in the distribution line, specifically the first and the second fuel feeding lines, thus increasing feasibility and decreasing mass of the pipes, which implies a decrease in weight on the aircraft. Having two pumps also limits the cases of complete failure of the first fuel feeding line as the malfunctioning of one of the pumps may be partially compensated by the second pump, ensuring a minimum pressure feed that can be compensated during a long duration by the gaseous hydrogen tank of the second fuel feeding line.

In an embodiment, the pressure reducing device is configured to reduce the pressure of the gaseous hydrogen supplied by the gaseous hydrogen tank to a pressure value between 5 and 50 bars.

In an embodiment, the pressure reducing device is a pressure reducing valve.

In an embodiment, the engine feeding circuit of the hybrid feeding system comprises a feeding valve between the accumulator and the engine, wherein the feeding valve is configured to control the flow of hydrogen fed to the engine.

The feeding valve is adapted to control the flow of hydrogen being supplied to the engine, allowing to supply more or less fuel depending on the engine's needs and/or the phase of a flight.

In a second inventive aspect, the invention provides an aircraft comprising a hybrid fuel feeding system according to the first inventive aspect of the invention.

In a third inventive aspect, the invention provides a method for feeding an engine of an aircraft, wherein the method comprises at least two operation modes:
a nominal operation mode in which the method comprises the following steps:
   a) supplying liquid hydrogen from a liquid hydrogen tank to a first fuel feeding line;
   b) increasing the pressure of the liquid hydrogen in the first fuel feeding line using at least one pump;
   c) conditioning the liquid hydrogen by supplying heat with a heat exchanger;
   d) supplying conditioned hydrogen from the heat exchanger to an accumulator;
   e) supplying conditioned hydrogen from the accumulator to the engine;
an emergency operation mode in which the method comprises the following steps:
   i) supplying gaseous hydrogen from a gaseous hydrogen tank to a second fuel feeding line;
   ii) conditioning the gaseous hydrogen reducing the hydrogen pressure;
   iii) supplying conditioned hydrogen to the accumulator;
   iv) supplying conditioned hydrogen from the accumulator to the engine.

In an embodiment, the usual mode of operation for feeding the engine of the aircraft is the nominal operation mode, where the purpose of the first fuel feeding line is to condition the hydrogen fed from a liquid hydrogen tank to be supplied to the engine.

During steps b), c) and d) the liquid hydrogen from the liquid hydrogen tank passes through at least one pump and at least one heat exchanger before reaching the accumulator.

Along the first fuel feeding line, the at least one pump increases the pressure of the liquid hydrogen and the heat exchanger supplies heat to the liquid hydrogen coming from the pump. Subsequently, once the liquid hydrogen has been conditioned, the conditioned hydrogen is supplied to the accumulator located upstream of the engine feeding circuit.

In the emergency operation mode, the second fuel feeding line supplies gaseous hydrogen from a gaseous hydrogen tank. The gaseous hydrogen is conditioned by reducing the pressure of the gaseous hydrogen before being supplied to the accumulator.

In step ii), the pressure of the gaseous hydrogen is reduced to achieve the required conditions in the accumulator, which is connected to the engine feeding circuit.

Steps e) of nominal operation mode and iv) of emergency operation mode occur in the engine feeding circuit. In the engine feeding circuit the gaseous hydrogen may have the necessary conditions to be supplied to the engine or may need further conditioning right before injection in the engine.

In an embodiment in step ii), the pressure is reduced using a pressure reducing device. In this embodiment, the gaseous hydrogen supplied by the gaseous hydrogen tank enters into a pressure reducing device to condition the gaseous hydrogen before the gaseous hydrogen is fed to the accumulator.

In an embodiment the pressure reducing device is preferably a valve which reduces the pressure of the gaseous hydrogen that exits from the gaseous hydrogen tank to condition the hydrogen before entering in the accumulator.

In an embodiment the conditioned hydrogen is supplied from the accumulator to the engine through a feeding valve configured to control the flow of hydrogen fed to the engine.

The feeding valve is the element that controls the amount of fuel supplied to the engine, which allows having an exhaustive control over the flow of the hydrogen before it enters the engine.

In an embodiment, the emergency operation mode is activated when there is a failure in the first feeding line (e.g. the pressure of the accumulator is under expected target). According to this embodiment, the usual mode of operation for feeding the engine of the aircraft is the nominal operation mode and the emergency operation mode is activated when the nominal operation mode fails, i.e. when something stops working properly on the first fuel feeding line.

In an embodiment, the method for feeding an engine of an aircraft comprises an additional operation mode, namely a coupled operation mode in which the method comprises the following steps:
steps a) to e) of the nominal operation mode for supplying a part of the required mass flow of conditioned hydrogen;
steps i) to iv) of the emergency operation mode for supplying the missing mass flow of conditioned hydrogen needed to match the required mass flow at the engine.

In an embodiment, the coupled operation mode is activated in specific transitory situations or specific operations in which the first fuel feeding line is not dimensioned to respond and/or when there is a failure in the first feeding line and needs assistance from the second fuel feeding line. In an embodiment, this coupled operation mode is activated in certain flight phases (such as take-off) and/or conditions (such as a sloshing event or failure of the first fuel feeding) in which higher hydrogen supply and/or pressure is needed if the first fuel feeding line is not able to respond to these conditions. This allows minimizing the dimensions of the first fuel feeding line and the liquid hydrogen tank while assuring appropriate hydrogen supply in all flight phases and conditions.

In an embodiment of the coupled operation mode, steps a) to e) of the nominal operation mode are performed for supplying the maximum capacity of mass flow allowed by the first fuel feeding line.

In an embodiment, the method for feeding an engine of an aircraft according to the third inventive aspect, in implemented with the hybrid fuel feeding system according to the first inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1: This figure shows a schematic representation of an embodiment of the hybrid feeding system of the invention.
- Figures 2: This figure shows a schematic representation of the first fuel feeding line of the hybrid fuel feeding system according to an embodiment of the invention.
- Figures 3: This figure shows a schematic representation of the second fuel feeding line of the hybrid fuel feeding system according to an embodiment of the invention.
- Figures 4: This figure shows a schematic representation of a detail of the engine feeding circuit of the hybrid fuel feeding system according to an embodiment of the invention.

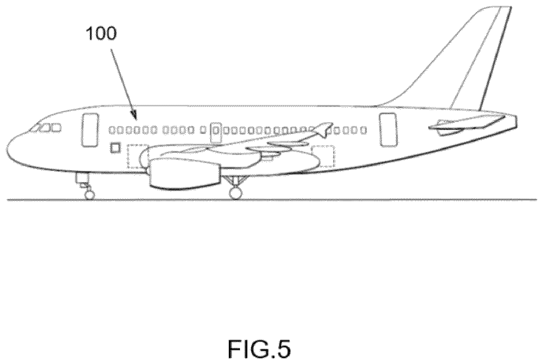

- Figures 5: This figure shows an aircraft comprising a hybrid fuel feeding system according to an embodiment of the invention.

### DETAILED DESCRIPTION OF THE INVENTION

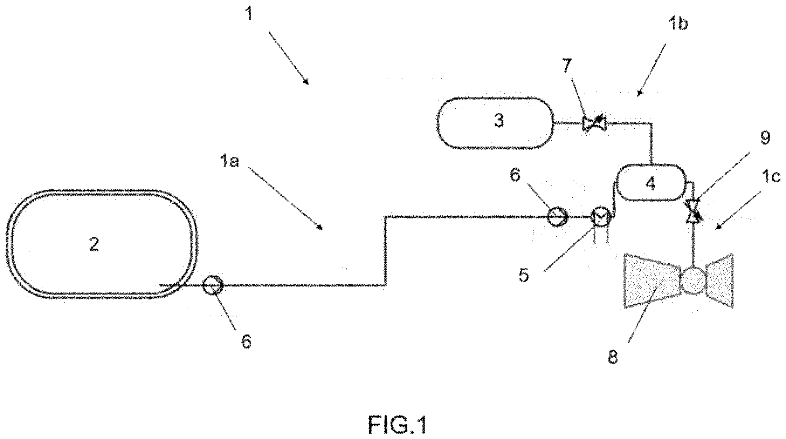

Figure 1 shows a schematic representation of a hybrid fuel feeding system (1) for an aircraft (100) according to an embodiment of the invention.

In the embodiment of figure 1, the hybrid fuel feeding system (1) comprises a first fuel feeding line (1a) which extends from a liquid hydrogen tank (2) to an accumulator (4), a second fuel feeding line (1b) which extends from a gaseous hydrogen tank (3) to the accumulator (4) and an engine feeding circuit (1c) which extends from the accumulator to an engine (8).

Also in figure 1, it can be observed that the first (1a) and second (1b) fuel feeding lines converge in the accumulator (4), where gaseous hydrogen is stored before feeding the engine (8) through the engine feeding circuit (1c).

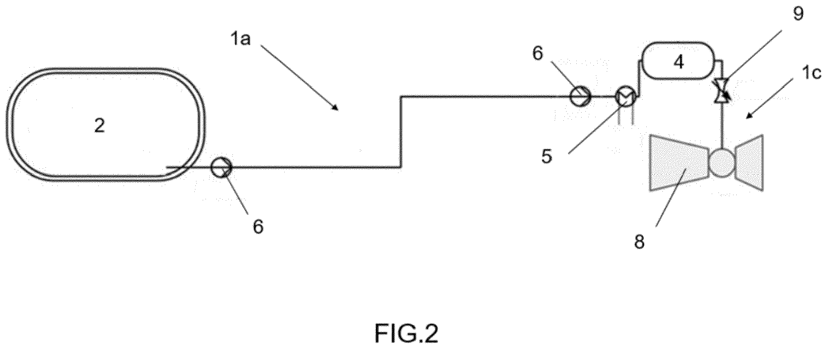

Figure 2 shows a schematic representation of the first fuel feeding line of the hybrid fuel feeding system of figure 1. In figures 1 and 2 it can be observed that the first fuel feeding line (1a) connects the liquid hydrogen tank (2) to the accumulator (4) and comprises at least one pump (6) and at least one heat exchanger (5) along the line. Specifically, the outlet of liquid hydrogen tank (2) is connected to the inlet of at least one pump (6a), the outlet of the pump (6b) is connected to the inlet (5a) of the heat exchanger (5) and the outlet (5b) of the heat exchanger (5) is connected to an inlet (4a) of the accumulator (4). All of these connections are done through conduits which transport hydrogen along the feeding line.

In an embodiment, the liquid hydrogen tank (2) is a low pressure tank. In an embodiment, the liquid hydrogen tank (2) is configured to store the liquid hydrogen at a pressure between 1 and 5 bars, preferably between 3,5 and 4,5 bars, more preferably at approximately 4 bars. In an embodiment, the liquid hydrogen tank (2) is configured to store the liquid hydrogen at a temperature between approximately 20,9 K and 27,1 K.

To feed the engine (8), the hydrogen must be in certain conditions. Therefore, the pressure and temperature of the liquid hydrogen are increased before the hydrogen is fed to the engine (8). For that purpose, the pump (6) increases the initial pressure of the liquid hydrogen (e.g. from 4 bars) to a second pressure (e.g. to 50 bars), and the heat exchanger (5) raises the initial temperature (e.g. from 21K) to a second temperature (e.g. to 300K).

In an embodiment of the first fuel feeding line (1a), as can be seen in figures 1 and 2, the first fuel feeding line (1a) comprises two pumps (6) connected in series before the heat exchanger (5). The pumps (6) are capable of gradually increasing the pressure of the liquid hydrogen.

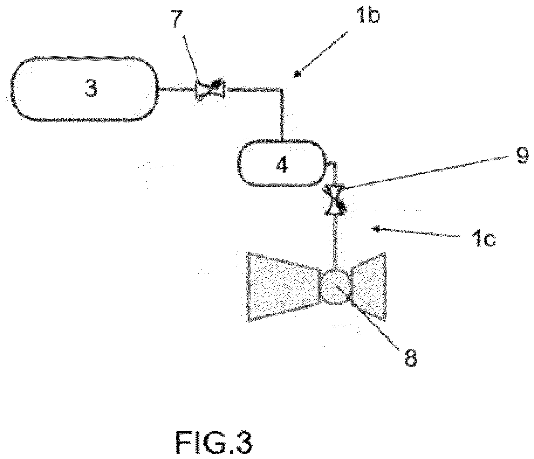

Figure 3 shows a schematic representation of the second fuel feeding line (1b) of the hybrid fuel feeding system of figure 1. In figures 1 and 3 it can be observed that the second fuel feeding line (1b) connects the gaseous hydrogen tank (3) to the accumulator (4) and comprises a pressure reducing device (7). Specifically, the outlet of gaseous hydrogen tank (3) is connected to the inlet of pressure reducing device (7a) and the outlet of the pressure reducing device (7b) is connected to an inlet (4b) of the accumulator (4). All of these connections are done through conducts which transport the hydrogen along the feeding line.

In an embodiment, the gaseous hydrogen tank (3) is a high pressure tank. In an embodiment, the gaseous hydrogen tank (3) is configured to store the gaseous hydrogen at a pressure between 5 and 1500 bars, preferably 700 bars, and at ambient temperature. The high pressure in the gaseous hydrogen tank (3) allows to reduce the volume of the gaseous hydrogen tank (3) and the total weight of the aircraft.

Preferably, the pressure reducing device (7) is a valve which purpose is reducing the pressure from 5-1500 bars to 5-35 bars in the second fuel feeding line.

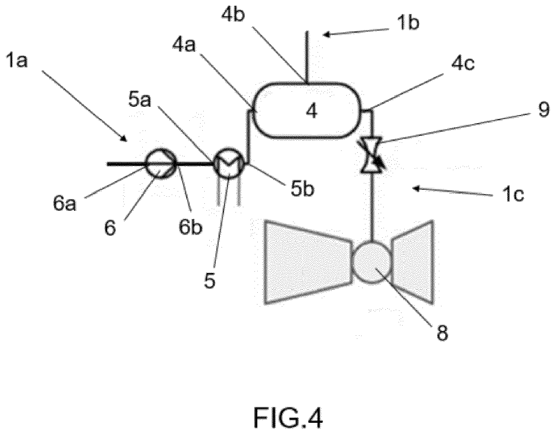

Figure 4 shows a schematic representation of a detail of the hybrid fuel feeding system of figure 1. As shown in figures 1 and 4, the first (1a) and second (1b) fuel feeding lines converge in the accumulator (4) to achieve the same conditions either for liquid hydrogen at low pressure from the first fuel feeding line (1a) or for gaseous hydrogen at high pressure from the second fuel feeding line (1b) before feeding the engine (8).

Also, figure 4 shows that in this embodiment the accumulator (4) comprises two inlets (4a, 4b) connected to the first (1a) and the second (1b) fuel feeding lines, respectively, and one outlet (4c) connected to the engine feeding circuit (1c). The hydrogen stored in the accumulator (4) has the conditions of pressure and temperature that the engine (8) needs, which depend on the engine (8) manufacturer requirements.

The engine feeding circuit (1c) is shown in all the figures 1 to 4. The engine feeding circuit (1c) extends from the accumulator (4) to the engine (8). In a preferred embodiment of the engine feeding circuit (1c), between the accumulator (4) and the engine (8), is located a feeding valve (9) to control the flow of gaseous hydrogen which is supplied to the engine (8). The appropriate flow and pressure values of the hydrogen to be supplied to the engine depend on the engine (8) and on the flight phase. In an embodiment, the mass flow order of gaseous hydrogen is in the range from 10 to 150 g/s and the pressure is in the range from 5 to 50 bars.

Advantageously, the invention provides a hybrid fuel feeding system (1) allowing an exhaustive control of hydrogen conditions at every point of the system (1).

Figure 6 shows an aircraft (100) comprising the hybrid fuel feeding system (1) according to the embodiment of the invention.

### Method for feeding an engine of an aircraft

The invention also provides a method for feeding an engine of an aircraft.

The method of the invention comprises at least two operation modes, namely a nominal operation mode and an emergency operation mode.

In the nominal operation mode, the method comprises the following steps:
a) supplying liquid hydrogen from a liquid hydrogen tank (2) to a first fuel feeding line (1a);
b) increasing the pressure of the liquid hydrogen in the first fuel feeding line (1a) using at least one pump (6);
c) conditioning the liquid hydrogen by supplying heat with a heat exchanger (5);
d) supplying conditioned hydrogen from the heat exchanger (5) to an accumulator (4);
e) supplying conditioned hydrogen from the accumulator (4) to the engine (8).

In the emergency operation mode, the method comprises the following steps:
i) supplying gaseous hydrogen from a gaseous hydrogen tank (3) to a second fuel feeding line (1b);
ii) conditioning the gaseous hydrogen reducing the hydrogen pressure;
iii) supplying conditioned hydrogen to the accumulator (4);
iv) supplying conditioned hydrogen from the accumulator (4) to the engine (8).

In an embodiment, the method is implemented with a hybrid fuel feeding system (1) of the present invention, for example the one shown in figures 1 to 4. In that case, the nominal operation mode is carried out by the first fuel feeding line (1a) and the engine feeding circuit (1c), shown in figure 2, and the emergency operation mode is carried out by the second fuel feeding line (1b) and the engine feeding circuit (1c), shown in figure 3.

In an embodiment, the nominal operation mode comprises the steps of supplying liquid hydrogen from a liquid hydrogen tank (2) to an inlet of a pump (6a), where the pump (6) increases the pressure of the liquid hydrogen. The liquid hydrogen with the increased pressure exits the pump (6) through the outlet of the pump (6b) and reaches the inlet of the heat exchanger (5a), where the liquid hydrogen is conditioned before being supplied to the accumulator (4). The heat exchanger (5) conditioning comprises providing heat to the liquid hydrogen to supply conditioned hydrogen at the outlet of the heat exchanger (5b) to feed the engine through the accumulator (4).

In an embodiment, the liquid hydrogen exits the liquid hydrogen tank (2) at pressure of preferably 4 bars and at a temperature of 21K. The pump (6) increases the initial pressure of the liquid hydrogen from 4 bars to a second pressure of e.g. 50 bar. Thus, the conditioned hydrogen is expelled out of the pump (6) and enters through the inlet (5a) of the heat exchanger (5). The heat exchanger (5) conditions the liquid hydrogen raising temperature from 21K to 300K.

Once the liquid hydrogen has been converted to gaseous hydrogen, the hydrogen is supplied to the accumulator (4) to be supplied to the engine (8) when it is necessary.

However, in cases of failure of the nominal operation mode, the hybrid fuel feeding system (1) has the capability to continue operating in the emergency operation mode.

The emergency operation mode is carried out by the second fuel feeding line (1b) and the engine feeding circuit (1c).

This mode of operation starts supplying gaseous hydrogen from a gaseous hydrogen tank (3) to a reducing valve inlet (7a) to reduce the pressure of the gaseous hydrogen to be supplied from the outlet (7b) of the pressure reducing device (7) to the accumulator (4) before supplying conditioned hydrogen from the accumulator (4) to the engine (8).

In an embodiment, the method for feeding an engine (8) of an aircraft (100) comprises an additional operation mode named a coupled operation mode. This coupled operation mode comprises the following steps:
steps a) to e) of the nominal operation mode for supplying a part of the required mass flow of conditioned hydrogen;
steps i) to iv) of the emergency operation mode for supplying the missing mass flow of conditioned hydrogen needed to match the required mass flow at the engine.

In an embodiment, the coupled operation mode is activated in specific transitory situations or specific operations in which the first fuel feeding line (1a) is not dimensioned to respond and/or when there is a failure in the first feeding line and needs assistance from the second fuel feeding line (1b).

In an embodiment of the coupled operation mode, steps a) to e) of the nominal operation mode are performed for supplying the maximum capacity of mass flow allowed by the first fuel feeding line (1a).

In a preferred embodiment, the gaseous hydrogen of the gaseous hydrogen tank (3) is at a high pressure between 5-1500 bars. The pressure reducing device reduces the pressure of the gaseous hydrogen from tank pressure to required pressure based on flight phase to supply it to the accumulator inlet (4b) to store the hydrogen before feeding the engine (8).

In some embodiments, the engine feeding circuit (1c) comprises a feeding valve (9) between the accumulator (4) and the engine (8), configured to control the flow of hydrogen fed to the engine (8).

## Claims

1. A hybrid fuel feeding system (1) for an engine (8) of an aircraft, the hybrid fuel feeding system (1) comprising:
- a liquid hydrogen tank (2),
- a gaseous hydrogen tank (3),
- an accumulator (4) comprising at least two inlets (4a, 4b) and at least one outlet (4c),
- a first fuel feeding line (1a) connecting the liquid hydrogen tank (2) to one (4a) of the inlets of the accumulator (4) and comprising at least one pump (6) and at least one heat exchanger (5),
- a second fuel feeding line (1b) connecting the gaseous hydrogen tank (3) to the other inlet (4b) of the accumulator (4) and comprising at least one pressure reducing device (7), and
- an engine feeding circuit (1c) connected to the accumulator's outlet (4c);
wherein the at least one pump (6) is connected between the liquid hydrogen tank (2) and the heat exchanger (5) and is configured to increase the pressure of the liquid hydrogen,
wherein the heat exchanger (5) is connected between the at least one pump (6) and the accumulator (4) and is configured to raise the temperature of the liquid hydrogen, and
wherein the pressure in the gaseous hydrogen tank (3) is higher than the pressure in the liquid hydrogen tank (2).

2. The hybrid fuel feeding system (1) according to claim 1, wherein the liquid hydrogen tank (2) is a low pressure tank configured to maintain liquid hydrogen at a pressure between 1 and 5 bars, preferably between 3,5 and 4,5 bars, more preferably at approximately 4 bars.

3. The hybrid fuel feeding system (1) according to any of the preceding claims, wherein the gaseous hydrogen tank (3) is a high pressure tank configured to maintain gaseous hydrogen at a pressure between 5 and 1500 bars.

4. The hybrid fuel feeding system (1) according to any of the preceding claims, wherein the first fuel feeding line (1a) comprises two pumps (6) between the liquid hydrogen tank (2) and the accumulator (4), wherein the pumps (6) are configured to successively increase the pressure of the liquid hydrogen from an initial pressure in the liquid hydrogen tank (2) to a second pressure.

5. The hybrid fuel feeding system (1) according to any of the preceding claims, wherein the pressure reducing device (7) is configured to reduce the pressure of the gaseous hydrogen supplied by the gaseous hydrogen tank (3) to a pressure value between 5 and 50 bars.

6. The hybrid fuel feeding system (1) according to any of the preceding claims, wherein the engine feeding circuit (1c) comprises a feeding valve (9) between the accumulator (4) and the engine (8), wherein the feeding valve (9) is configured to control the flow of hydrogen fed to the engine (8).

7. An aircraft (100) comprising a hybrid fuel feeding system (1) according to any of the preceding claims.

8. A method for feeding an engine (8) of an aircraft, wherein the method comprises at least two operation modes:
a nominal operation mode in which the method comprises the following steps:
a) supplying liquid hydrogen from a liquid hydrogen tank (2) to a first fuel feeding line (1a);
b) increasing the pressure of the liquid hydrogen in the first fuel feeding line (1a) using at least one pump (6);
c) conditioning the liquid hydrogen by supplying heat to said liquid hydrogen with a heat exchanger (5);
d) supplying conditioned hydrogen from the heat exchanger (5) to an accumulator (4);
e) supplying conditioned hydrogen from the accumulator (4) to the engine (8);
an emergency operation mode in which the method comprises the following steps:
i) supplying gaseous hydrogen from a gaseous hydrogen tank (3) to a second fuel feeding line (1b);
ii) conditioning the gaseous hydrogen reducing the hydrogen pressure;
iii) supplying conditioned hydrogen to the accumulator (4);
iv) supplying conditioned hydrogen from the accumulator (4) to the engine (8).

9. The method for feeding an engine (8) of an aircraft according to claim 8, wherein the method comprises an additional operation mode:
a coupled operation mode in which the method comprises the following steps:
steps a) to e) of the nominal operation mode for supplying a part of the required mass flow of conditioned hydrogen;
steps i) to iv) of the emergency operation mode for supplying the missing mass flow of conditioned hydrogen needed to match the required mass flow at the engine.

10. The method for feeding an engine (8) of an aircraft according to claim 9, wherein in the coupled operation mode steps a) to e) of the nominal operation mode are performed for supplying the maximum capacity of mass flow allowed by the first fuel feeding line (1a).

11. The method for feeding an engine (8) of an aircraft according to any of claims 8 to 10, wherein the conditioned hydrogen is supplied from the accumulator (4) to the engine (8) through a feeding valve (9) configured to control the flow of hydrogen fed to the engine (8).

12. The method for feeding an engine (8) of an aircraft according to any of claims 8 to 11, wherein the emergency operation mode is activated when there is a failure in the first feeding line (1a).

13. The method for feeding an engine (8) of an aircraft according to any of claims 8 to 12, wherein the method is implemented with a hybrid fuel feeding system (1) according to any of claims 1 to 6.
